# EUROPÄISCHE PATENTSCHRIFT

(11) **EP 0 972 613 B1**
(45) Veröffentlichungstag und Bekanntmachung des Hinweises auf die Patenterteilung: **05.12.2001**
(21) Anmeldenummer: 98810679.5
(22) Anmeldetag: 15.07.1998
(51) Int. Cl.: B24B 41/06, B23B 33/00, B23Q 3/12

(54) **Mitnahmevorrichtung für eine Werkzeugmaschine**
Driving dog for machine tool
Toc d'entraînement pour machine outil

(43) Veröffentlichungstag der Anmeldung: 19.01.2000
(73) Patentinhaber: Fritz Studer AG, CH-3612 Steffisburg (CH)
(72) Erfinder: Roth, Erwin, 2562 Port (CH); Mühlematter, Ulrich, 3705 Faulensee (CH)
(74) Vertreter: AMMANN PATENTANWAELTE AG BERN

(56) Entgegenhaltungen:
- EP-A- 0 782 898
- CH-A- 340 426
- CH-A- 663 374
- GB-A- 1 109 277
- US-A- 2 693 631

## Beschreibung

Die vorliegende Erfindung bezieht sich auf eine Mitnahmevorrichtung für eine Werkzeugmaschine, insbesondere Rundschleifmaschine oder Drehmaschine, bei der das Werkstück zwischen zwei ortsfesten Spitzen angetrieben ist, gemäss Oberbegriff von Patentanspruch 1. Dabei bezieht sich die vorliegende Erfindung vor allem auf die Bearbeitung von kleinen Präzisionsteilen.

Eine solche Mitnahmevorrichtung ist aus der CH-A-663 374 des gleichen Anmelders bekannt, wobei das Einführen des Werkstücks sowie seine Freigabe bei Druck auf die Federelemente erfolgt, wodurch die prismenförmige Werkstückhalterung auseinandergetrieben wird. Eine Betätigung durch äusseren Druck bedingt relativ grosse Aussenabmessungen der Mitnahmevorrichtung und ausserdem sind die Oeffnungs- und Schliessbewegungen nicht genau definiert. Dies alles schränkt das Anwendungsgebiet ein, insbesondere in Richtung kleine Werkstücke.

Ausserdem ist aus der EP-A-782 898 ein weiterer Spannaufsatz bekannt, bei dem das Spannfutter einer Drehbank auf radial sich bewegende Spannfedern wirkt, die auf Zentrierspitzen wirken, um das Werkstück einzuspannen. Auch hier ergeben sich ähnliche Nachteile wie oben beschrieben.

Die Fertigung von hochpräzisen Kleinteilen, z. B. Düsennadeln für die Einspritztechnik im Automobilbau, stellt hohe Anforderungen an die Mitnahmevorrichtung für den Werkstückantrieb beim Schleifen zwischen zwei festen Spitzen. Beim Schleifen von solchen hochpräzisen Kleinteilen können durch die kleinen Abmessungen einerseits und durch die geringe Biege-Eigensteifigkeit andererseits, mit den herkömmlichen Mitnahmevorrichtungen, wie z.B. Dreh-Herz, Mitnehmerspitzen und dergl. die hohen geometrischen Anforderungen und die Prozess-Sicherheit nicht gewährleistet werden.

Die wesentlichsten Nachteile der herkömmlichen Mitnahmevorrichtungen gemäss Stand der Technik sind
- Verspannen des Werkstücks durch die Klemmkraft des Mitnehmers auf dem Werkstück,
- grosse umlaufende Masse des Mitnehmers im Verhältnis zur Steifigkeit des Werkstücks,
- die Kraftübertragung von der Maschine auf den Mitnehmer erzeugt eine zu hohe Querkraft im Verhältnis zur Steifigkeit des Werkstücks und die geometrischen Abmessungen beschränken die bearbeitbare Länge des Werkstücks.

Die Entwicklungen in der Einspritztechnik werden in Zukunft zu noch kleineren Werkstückabmessungen und höheren Präzisionsanforderungen führen, womit der Werkstück-Mitnahme noch grössere Bedeutung zukommen wird.

Es ist von diesem Stand der Technik ausgehend Aufgabe der vorliegenden Erfindung eine Mitnahmevorrichtung für Werkzeugmaschinen anzugeben, die durch eine konsequente Trennung der Funktion Werkstückklemmung von der Funktion Drehmomentübertragung von der Maschine auf die Werkstückklemmung, die oben beschriebenen Nachteile beseitigt und dabei eine geringe umlaufende Masse des Mitnehmers bietet. Diese Aufgabe wird mit der Mitnahmevorrichtung gemäss Patentanspruch 1 gelöst. Weitere Vorteile und Ausbildungen der Erfindung sind in den abhängigen Ansprüchen definiert.

Die Erfindung wird im folgenden anhand einer Zeichnung von Ausführungsbeispielen näher erläutet.
- Figur 1: zeigt in einer Aufsicht den Mitnehmer der erfindungsgemässen Mitnahmevorrichtung,
- Figur 2: zeigt den auf dem Werkstück geklemmten Mitnehmer,
- Figur 3: zeigt in einer schematischen Darstellung und im Schnitt den Mitnehmer mit dem Werkstück bei der Bearbeitung,
- die Figuren 4 und 5: zeigen den Mitnehmer und die Rundschleifmaschine in geöffneter Stellung,
- die Figuren 6 - 10: zeigen eine Ausführungsvariante zu den Figuren 1 - 5, wobei der Mitnehmer auf einer Mitnehmerplatte befestigt ist.

Der Mitnehmer 1 besteht im wesentlichen aus zwei ringförmigen Federelementen 2 und 3, die in einer Ebene symmetrisch zur Symmetrieachse S und nebeneinander angeordnet sind und an der Übergangsstelle eine durchgehende Öffnung 4 aufweisen, die zwei prismenförmige WerkstückAufnahmen 5 definieren.

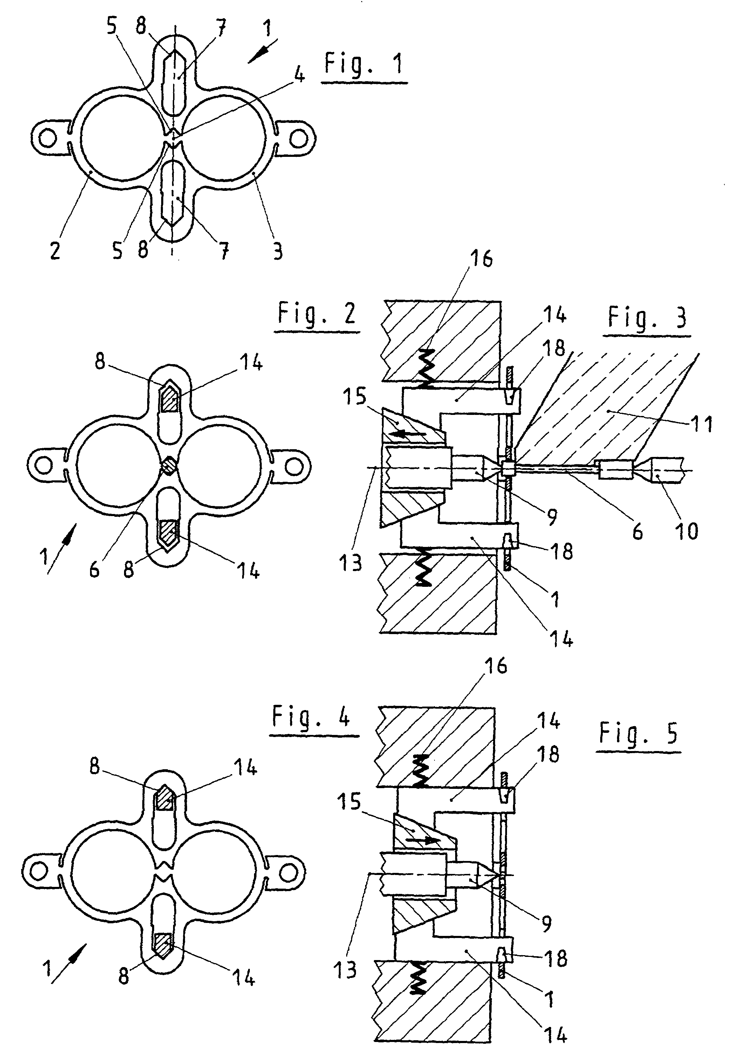

Wie aus Figur 2 hervorgeht, wird die Spannkraft auf das Werkstück 6 einzig durch die Federkraft der beiden ringförmigen Federelemente erzeugt, wobei diese Spannkraft von den Dimensionen, d.h. Durchmesser, Dicke und Form des Mitnehmers und vom Material abhängt. In vorliegendem Beispiel wird Federstahl verwendet. Die Dimension der Werkstückaufnahme-Prismen wird selbstverständlich durch den Durchmesser der Werkstücke bestimmt und daran angepasst.

In Richtung der Symmetrieachse S, bzw. der Spitzen der Werkstückaufnahmen, weist der Mitnehmer zwei längliche Öffnungen 7 auf, die Aussen jeweils ein prismenförmiges Ende 8 aufweisen die, siehe Figur 2, der Aufnahme von entsprechend geformten, prismenförmigen Bolzen 14 am Öffnungsmechanismus der Rundschleifmaschine dienen. Durch das Spreizen der Bolzen wird die Feder bei den Aufnahmen ebenfalls gespreizt, siehe Figur 4, um das Werkstück aufzunehmen oder entnehmen zu lassen.

In Figur 3 ist schematisch der für die Erfindung relevante Teil der Rundschleifmaschine angedeutet und man erkennt das Werkstück 6, beispielsweise eine Düsennadel für die Einspritztechnik, das zwischen zwei ortsfesten Spitzen 9 und 10 gelagert ist und durch ein Schleifwerkzeug 11 bearbeitet wird. Der Mitnehmer 1 wird durch einen der beiden Bolzen 14 des Öffnungsmechanismus 13 über den Antrieb der Rundschleifmaschine angetrieben.

Der angetriebene Öffnungsmechanismus enthält zwei Bolzen 14, die radial bis zu einem Festanschlag verstellbar sind, wobei diese Bolzen von einem Verschiebekonus 15 beaufschlagt sind, der in der Stellung von Figur 3 herausgezogen ist derart, dass die Bolzen unter der Kraft einer Feder 16 stehen und in dieser Stellung keine Kraft auf den Mitnehmer ausüben, während in der Stellung gemäss Figur 5 der Konus 15 eingeschoben ist und die beiden Bolzen entgegen der Kraft der Feder 16 und somit den Mitnehmer, bzw. dessen Werkstückaufnahme-Prismen, spreizt. Zur sicheren Führung des Mitnehmers weisen die Bolzen an ihren prismatischen Enden Einkerbungen 18 auf.

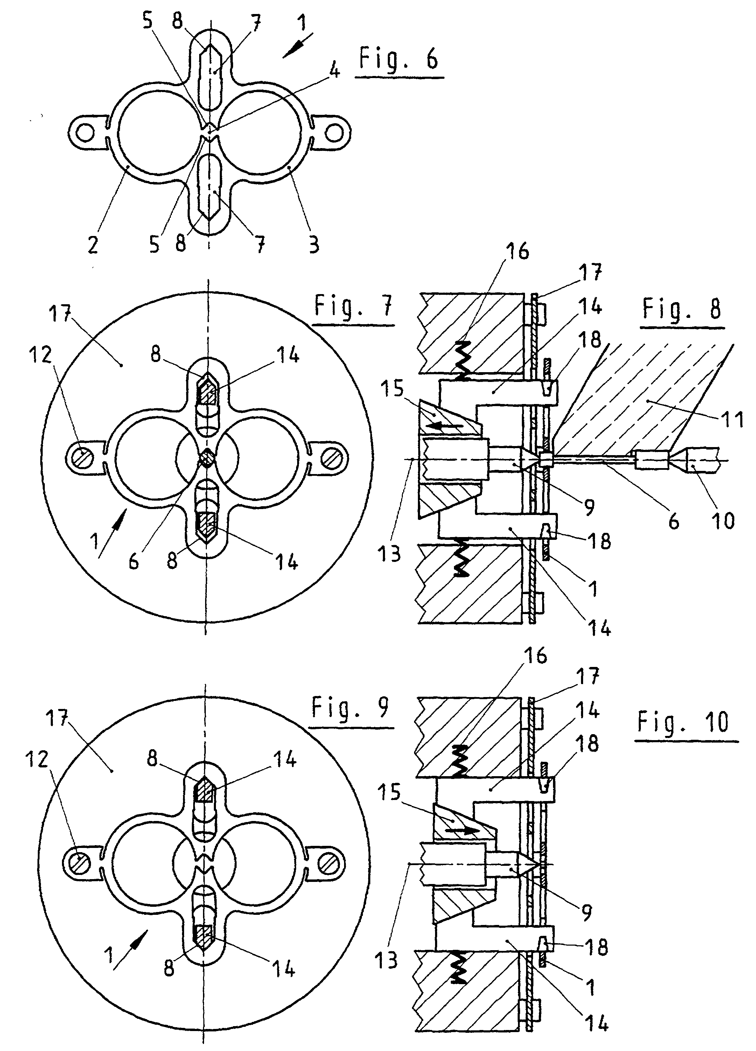

Im Ausführungsbeispiel gemäss den Figuren 6 - 10 ist der Mitnehmer 1 auf einer Mitnehmerplatte 17 mittels der Schrauben 12 befestigt und diese Mitnehmerplatte ist an der Rundschleifmaschine befestigt. Solche Mitnehmerplatten werden seit Jahren vom Anmelder hergestellt und verwendet und sind derart ausgebildet, dass eine schwimmende und spielfreie Verbindung gewährleistet ist. Durch entsprechende Formgebung der Verbindungselemente der Mitnehmerplatte wird mit dem Mitnehmer eine drehsteife, radial und achsial nachgiebige Verbindung hergestellt, die das Antriebsdrehmoment von der Maschine auf den Mitnehmer annähernd querkraftfrei überträgt. Durch Zusammenfügen von mehreren Mitnehmerplatten kann die Drehsteifigkeit den Anforderungen entsprechend angepasst werden.

Aus der Beschreibung geht hervor, dass durch die genaue Ausgestaltung sowohl der Werkstückaufnahme-Prismen 5 als auch der prismenförmigen Enden 8 die Zentrumsachse der beiden Werkstückaufnahme-Prismen mit der Spitzenachse übereinstimmt und dass es möglich ist, den Mitnehmer rechtwinklig zu der Werkstückachse zu führen und auf das Werkstück abzusenken. Der ganze Mitnehmer ist in einer Ebene angeordnet, so dass keine Verwindung und kein Biegemoment auf das Werkstück übertragen wird.

Die Klemmkraft, bzw. die Mitnahmekraft wird einzig durch die Dimension und das Material des Mitnehmers bestimmt, so dass die Klemmkraft durch entsprechende Änderung der Materialdicke leicht und ohne Änderung von weiteren Eigenschaften den jeweiligen Anforderungen angepasst werden kann.

Wie weiter oben beschrieben, ist der Mitnehmer in vorliegendem Ausführungsbeispiel aus Federstahl gefertigt, doch kann auch ein anderes Material zu Verwendung kommen. Ausserdem sind die ringförmigen Federelemente in den vorliegenden Ausführungsbeispielen kreisrund ausgeführt, doch ist es denkbar, anders gestaltete Federelemente zu verwenden, beispielsweise dreieckige oder mehreckige ringförmige Federelemente, die an ihrer Übergangsstelle die durchgehende Öffnung mit den prismenförmigen WerkstückAufnahmen aufweisen. Anstatt der prismaförmigen Werkstückaufnahmen kann in gewissen Anwendungsfällen auch eine anders gestaltete Kontaktzone in Betracht kommen, z.B. Formschluss oder mehrere Kontaktpunkte, z.B. drei.

Die Erfindung wurde anhand einer Rundschleifmaschine erläutert, doch kann die Mitnahmevorrichtung gemäss Erfindung auch für andere Werkzeugmaschinen wie Präzisionsdrehbänke, bzw. -maschinen verwendet werden.

Moderne Berechnungsmethoden gestatten eine einfache Optimierung der Formgebung, die als Kompromiss zwischen statischen und dynamischen Anforderungen sowie der zu begrenzenden Materialermüdung durch den Werkstückwechsel zu betrachten ist.

## Patentansprüche

1. Mitnahmevorrichtung für eine Werkzeugmaschine, insbesondere Rundschleif- oder Drehmaschine, bei der das Werkstück (6) zwischen zwei ortsfesten Spitzen (9, 10) angetrieben ist, mit einer angetriebenen Einrichtung (13) zur abnehmbaren Befestigung eines Mitnehmers, der ausgebildet ist, das Werkstück mittels Federkraft zu halten und zu drehen, wobei der Mitnehmer (1) zwei symmetrisch nebeneinander angeordnete, ringförmige Federelemente (2, 3) enthält, die an der Uebergangsstelle zwischen den beiden Federelementen eine durchgehende Oeffnung (4) aufweisen, die zwei prismenförmige Werkstückaufnahmen (5) bildet, **dadurch gekennzeichnet, dass** der Mitnehmer (1) in der Achse der Spitzen der prismenförmigen Werkstückaufnahmen (5) je eine Längsöffnung (7) mit einem prismenförmigen Ende (8) zur Aufnahme je eines entsprechend geformten Bolzens (14) an der angetriebenen Einrichtung (13) der Werkzeugmaschine zum Spreizen der Federelemente aufweist.

2. Mitnahmevorrichtung nach Anspruch 1, **dadurch gekennzeichnet, dass** die ringförmigen Federelemente (2, 3) rund, drei- oder mehreckig ausgebildet sind.

3. Mitnahmevorrichtung nach Anspruch 1 oder 2, **dadurch gekennzeichnet, dass** die beiden Bolzen (14) mittels einem verschiebbaren Konus (15) spreizbar sind.

4. Mitnahmevorrichtung nach einem der Ansprüche 1 bis 3, **dadurch gekennzeichnet, dass** der Mitnehmer (1) auf einer Mitnehmerplatte (17) befestigt ist.

5. Verwendung der Mitnahmevorrichtung nach Anspruch 1 an einer Werkzeugmaschine, **dadurch gekennzeichnet, dass** die Werkzeugmaschine eine Einrichtung aufweist, die ausgebildet ist, beim Stückwechsel in die Werkstückzone einzudringen.

6. Verwendung der Mitnahmevorrichtung nach Anspruch 1, **dadurch gekennzeichnet, dass** der Mitnehmer ausserhalb des Arbeitsbereichs der Werkzeugmaschine auf das Werkstück geklemmt und dann zusammen mit diesem geladen und entladen wird.

## Claims

1. Driving device for a machine tool, more particularly a circular grinding machine or a lathe where the workpiece (6) is driven between two stationary centres (9, 10), comprising a driven device (13) allowing a removable attachment of a driver which is adapted to hold and turn the workpiece by means of spring force, the driver (1) comprising two adjacent, symmetrically disposed annular spring elements (2, 3) whose junction is provided with a through-going opening (4) which forms two prismatic workpiece holders (5), **characterised in that** the driver (1) comprises respective longitudinal openings (7) which are disposed in the axis of the points of the prismatic workpiece holders (5) and provided with prismatic ends (8) for receiving respective, correspondingly shaped bolts (14) of the driven device (13) of the machine tool in order to spread apart the spring elements.

2. Driving device according to claim 1, **characterised in that** the annular spring elements (2, 3) have a circular, triangular, or polygonal configuration.

3. Driving device according to claim 1 or 2, **characterised in that** the two bolts (14) are capable of being spread apart by means of a displaceable cone (15).

4. Driving device according to any one of claims 1 to 3, **characterised in that** the driver (1) is fastened to a driver plate (17).

5. Use of the driving device according to claim 1 in a machine tool, **characterised in that** the machine tool comprises a device which is capable of penetrating into the workpiece zone during workpiece exchange.

6. Use of the driving device according to claim 1, **characterised in that** the driver is clamped onto the workpiece outside the working area of the machine tool and subsequently charged and discharged along with the workpiece.

## Revendications

1. Dispositif d'entraînement pour une machine-outil, plus particulièrement une rectifieuse cylindrique ou un tour, où la pièce à usiner (6) est entraînée entre deux pointes stationnaires (9, 10), comprenant un organe entraîné (13) permettant la fixation amovible d'un entraîneur, lequel est adapté à retenir la pièce à usiner par force élastique et à l'entraîner en rotation, ledit entraîneur (1) comportant deux éléments à ressort (2, 3) annulaires et juxtaposés de manière symétrique, munis à la connexion entre les deux éléments à ressort d'une ouverture traversante (4) formant deux fixations de pièce (5) prismatiques, **caractérisé en ce que** l'entraîneur (1) présente chaque fois, dans l'axe des pointes des fixations de pièce (5) prismatiques, une ouverture longitudinale (7) ayant une extrémité (8) prismatique destinée à recevoir une cheville (14) de forme prismatique de l'organe entraîné (13) de la machine-outil, lesdites chevilles permettant d'écarter les éléments à ressort.

2. Dispositif d'entraînement selon la revendication 1, **caractérisé en ce que** les éléments à ressort (2, 3) annulaires présentent une configuration ronde, triangulaire ou polygonale.

3. Dispositif d'entraînement selon la revendication 1 ou 2, **caractérisé en ce que** les deux chevilles (14) sont capables d'être écartées au moyen d'un cône (15) déplaçable.

4. Dispositif d'entraînement selon l'une quelconque des revendications 1 à 3, **caractérisé en ce que** l'entraîneur (1) est monté sur un disque d'entraînement (17).

5. Utilisation du dispositif d'entraînement selon la revendication 1 sur une machine-outil, **caractérisée en ce que** la machine-outil comporte un organe adapté à pénétrer dans la zone de la pièce à usiner pendant l'échange de la pièce à usiner.

6. Utilisation du dispositif d'entraînement selon la revendication 1, **caractérisée en ce que** l'entraîneur est mis serré sur la pièce à usiner hors de la zone de travail de la machine-outil et ensuite chargé et déchargé avec la pièce.
